# EUROPEAN PATENT APPLICATION

(11) **EP 0 973 114 A1**
(43) Date of publication of application: **19.01.2000**
(21) Application number: 98950477.4
(22) Date of filing: 30.10.1998
(51) Int. Cl.: G06F 19/00, G06F 17/60

(54) **AN ORDER DATA MANAGEMENT SYSTEM**

(30) Priority: 06.11.1997 JP 30390097; 28.08.1998 JP 24366798
(71) Applicant: Toshiba Tec Kabushiki Kaisha, Tokyo 101-8442 (JP)
(72) Inventor: SANO, Kouichi, Ihara-gun, Shizuoka-ken 421-3104 (JP)
(74) Representative: Fuchs Mehler Weiss & Fritzsche
(86) International application number: JP9804937
(87) International publication number: WO9924929

(57) **Abstract**

An order data management system comprises a radio portable terminal 33 for inputting and radio-transmitting order information, a POS terminal 32 for storing sales information in a storage unit and managing the sales information, a display/input apparatus 34 for displaying the order information and inputting completion of an ordered food in a kitchen, a printing apparatus 35 for printing a bill in the kitchen, a system control apparatus 36 for managing information such as the sales information and order information, a communication control apparatus 39 wired to the system control apparatus 36, radio terminals 41-43 wired to the POS terminal, the display/input apparatus and the printing apparatus, and radio base stations 37, 38, wired to the communication control apparatus, for radio-communicating with the radio portable terminal and the radio terminal with use of full-duplex bidirectional radio links.

## Description

### Technical Field

The present invention relates to an order data management system for inputting customer's order information with use of a radio portable terminal, thereby entering an order, notifying a worker and managing sales information by means of a POS (Point of Sales) terminal, and more particularly to an order data management system for use in restaurants, etc.

### Background Art

In a conventional order data management system, in general, a server carrying a radio portable terminal goes to a customer and takes an order. The server inputs the content of the order to the radio portable terminal. The content of the order is radio-transmitted from the terminal to an order processing apparatus. Further, the content of the order is sent from the order processing apparatus to a printing apparatus disposed in a kitchen and the content of the order is printed out. In addition, the content of the order is sent to a POS terminal, and the ordered food is cooked in the kitchen with reference to the printed information. If the customer finishes the meal, he/she goes to the POS terminal for payment settlement.

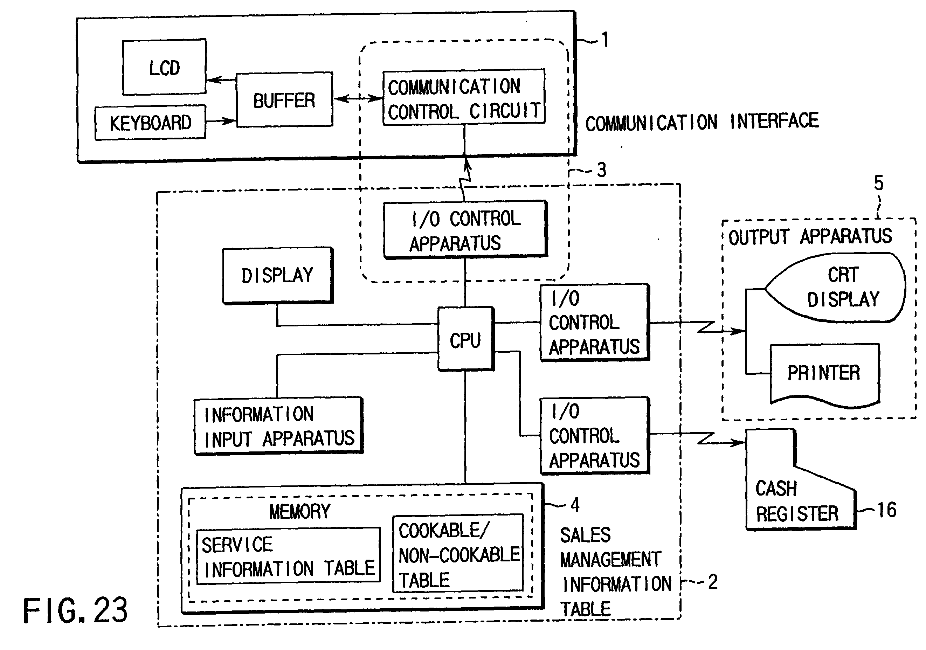

For example, in the invention described Jpn. Pat. Appln. KOKAI Publication No. 63-211063, as shown in FIG. 23, a terminal apparatus 1 carried by a server is provided with an input function and a display function. The terminal apparatus 1 and a processing apparatus 2 are bidirectionally connected via a communication interface 3, for example, by means of radio communication, so that the speed of data transmission between the terminal apparatus 1 and processing apparatus 2 is increased. In addition, the processing apparatus 2 is provided with a sales management information table 4 so that the server may quickly obtain sales management information, where necessary. The processing apparatus 2 outputs order information to an output apparatus 5 provided in the kitchen for the purpose of notification. Moreover, the processing apparatus 2 transmits order information, etc. to a cash register 6 in preparation for settlement of payment by the customer.

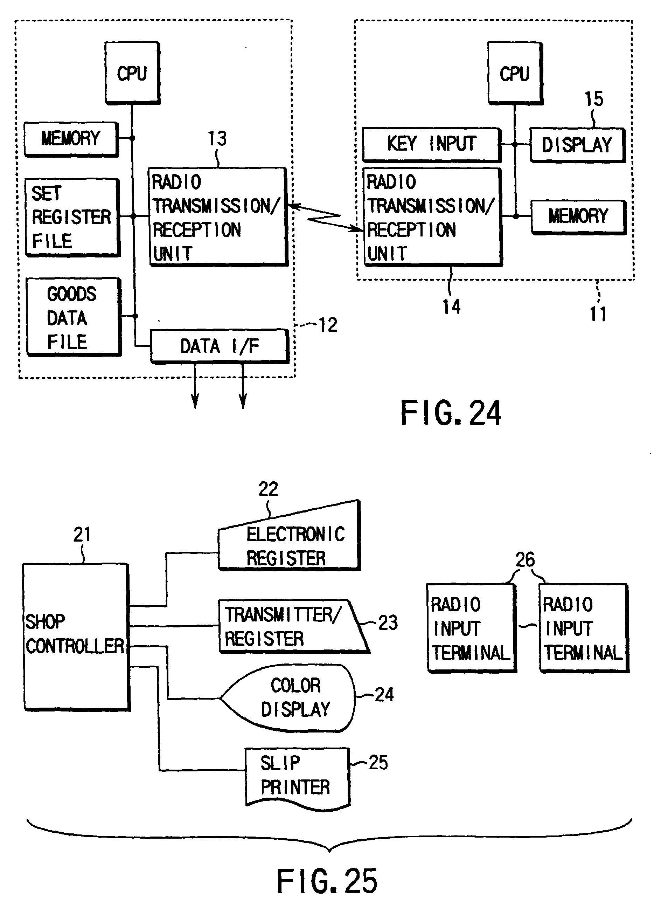

In the invention described Jpn. Pat. Appln. KOKAI Publication No. 1-306963, as shown in FIG. 24, a radio portable terminal 11 and a controller 12 are provided with radio transmission/reception units 14 and 13, respectively. Bidirectional radio transmission is performed between the radio portable terminal 11 and controller 12 so that out-of-stock information or additional information may be displayed on a display 15 of the radio portable terminal 11.

In the invention described Jpn. Pat. Appln. KOKAI Publication No. 3-110669, as shown in FIG. 25, a shop controller 21 is connected to an electronic register 22, a transmission/reception unit 23, a color display 24 and a slip printer 25. In addition, portable radio terminals 26 are provided. Since the radio terminals 26 can perform bidirectional communication, the server can understand the current state of cooking, the finished food of menu, etc. on the terminal 26 without going to the kitchen. In addition, the server can inquire about service information such as the current state of cooking, finished food, out-of-stock information or the number of knives and forks, or after-meal menu information, on the terminal 26.

The conventional order data management system, as described above, mainly comprises an electronic cash register, disposed at a corner of the dining area, for performing payment settlement for customers; a display/input apparatus and a printer for printing order information, disposed in the kitchen or a cooking place, the display/input apparatus functions to customer's order information and input data on completion of ordered food; and a controller, disposed in an office, etc., for controlling order management, sales management, etc. These devices are connected over lines, and radio communication is performed only between a radio main device connected to the controller and radio portable terminals.

In the system wherein the controller, electronic cash register, display/input apparatus and printer are connected over lines, however, a construction work for wiring needs to be performed when the dining area or kitchen is to be remodeled. As a result, a large-scale construction is required over a long time period with business suspended. The place for installation is limited, and once installation is finished, relocation is not easy.

In the above prior art, the radio communication between the radio base station and the radio portable terminal is performed by, e.g. half-duplex radio transmission with a transmission speed of about 4,800 bps which conforms to "400 MHz BAND DATA TRANSMISSION RADIO EQUIPMENT FOR SPECIFIED LOW POWER RADIO STATION" of the Association of Radio Industries and Businesses (ARIB). As a result, the transmission speed is low and a great deal of processing time is required for radio transmission.

The radio base station can communicate with only one radio portable terminal at a time. If the number of radio portable terminals is increased or the device such as the POS terminal designed for radio communication is used, the wait time for data transmission becomes longer or collision of electric waves frequently occurs. Consequently, the operation of the order data management system is not smoothly performed. In particular, problems may occur in the order data radio transmission of the radio portable terminal, which is most important in the order data management system. This being the case, it is not possible to incorporate a number of radio portable terminals or other radio terminals in the system.

### Disclosure of Invention

The present invention has been made in consideration of the above problems, and its object is to provide an order data management system wherein multiduplexed bidirectional radio communication of information is performed between a system control apparatus and either or both of a POS terminal and order information notification means. Thereby, a transmission wait time is reduced and collision of electric waves is reduced. Accordingly, works can be smoothly done. In addition, when a layout of a dining area, a kitchen, etc. is changed, rearrangement of the POS terminal and order information notification means can be made at a low cost in a short time.

According to a mode of the present invention, there is provided an order data management system comprising: a radio portable terminal for inputting and radio-transmitting order information; a POS terminal for storing sales information in a storage unit and managing the sales information; order information notification means for notifying a worker of the order information; a system control apparatus for managing information such as the sales information and order information; a communication control apparatus wired to the system control apparatus; a radio terminal wired to one or both of the POS terminal and the order information notification means; and a radio base station, wired to the communication control apparatus, for radio-communicating with the radio portable terminal and the radio terminal with use of multiduplexed bidirectional radio links, wherein the system control apparatus transmits and receives information, by radio communication, to and from the radio portable terminal as well as the POS terminal and the order information notification means wired to the radio terminal, via the communication control apparatus and the radio base station.

Therefore, multiduplexed bidirectional radio communication of information is performed between a system control apparatus and either or both of a POS terminal and order information notification means. Thus, a transmission wait time is reduced and collision of electric waves is reduced. Accordingly, works can be smoothly done. Moreover, when a layout of a dining area, a kitchen, etc. is changed, rearrangement of the POS terminal and order information notification means can be made at a low cost in a short time.

### Brief Description of Drawings

FIG. 1 is a block diagram showing the structure of an entire system according to a first embodiment of the present invention;
FIG. 2 is a block diagram showing the structure of a radio portable terminal in the embodiment;
FIG. 3 is a view showing an external appearance of the radio portable terminal in the embodiment;
FIG. 4 is a block diagram showing the structure of a radio base station in the embodiment;
FIG. 5 is a block diagram showing the structure of a communication control apparatus in the embodiment;
FIG. 6 is a block diagram showing the structure of a system control apparatus in the embodiment;
FIG. 7 shows an example of display image on a display/input apparatus in the embodiment;
FIG. 8 shows a memory configuration of a memory unit in the system control apparatus according to the embodiment;
FIG. 9 shows the structure of a menu area in the memory unit shown in FIG. 8;
FIG. 10 shows the structure of an order content area in the memory unit shown in FIG. 8;
FIG. 11 shows the structure of a table state region in the memory unit in FIG. 8;
FIGS. 12A to 12C show examples of the screen of the display of the radio portable terminal in the embodiment;
FIGS. 13A to 13O show examples of the switch screen of the display of the radio portable terminal in the embodiment;
FIGS. 14A and 14B are flow charts illustrating a series of operations of the order data management system according to the embodiment;
FIG. 15 is a view for describing a radio communication method in the embodiment;
FIG. 16 is a block diagram showing the structure of an entire system according to a second embodiment of the invention;
FIG. 17 is a block diagram showing the structure of an entire system according to a third embodiment of the invention;
FIG. 18 shows an example of display image on the display/input apparatus in the third embodiment;
FIGS. 19A to 19C show memory contents of a memory unit in a system control apparatus;
FIGS. 20A to 20E show examples of the switch screen of the display of a radio portable terminal in the third embodiment;
FIGS. 21A to 21C are flow charts for describing a series of operations of the order data management system according to the third embodiment;
FIG. 22 shows an example of a label print in the third embodiment;
FIG. 23 is a block diagram showing prior art;
FIG. 24 is a block diagram showing other prior art; and
FIG. 25 is a block diagram showing other prior art.

### Best Mode of Carrying Out the Invention

An embodiment of the present invention will now be described with reference to the accompanying drawings. This embodiment adopts a radio system conforming to "Second-generation cordless Phone System Standard (RCR-STD28)" of the ARIB (English-version PERSONAL HANDY PHONE SYSTEM RCR STANDARD) and a transmission control procedure conforming to "PHS Internet Access Forum Standard (PIAFS) Specifications" of the PHS (Personal Handy-phone System) Internet Access Forum.

A first embodiment of the present invention will now be described with reference to the accompanying drawings.

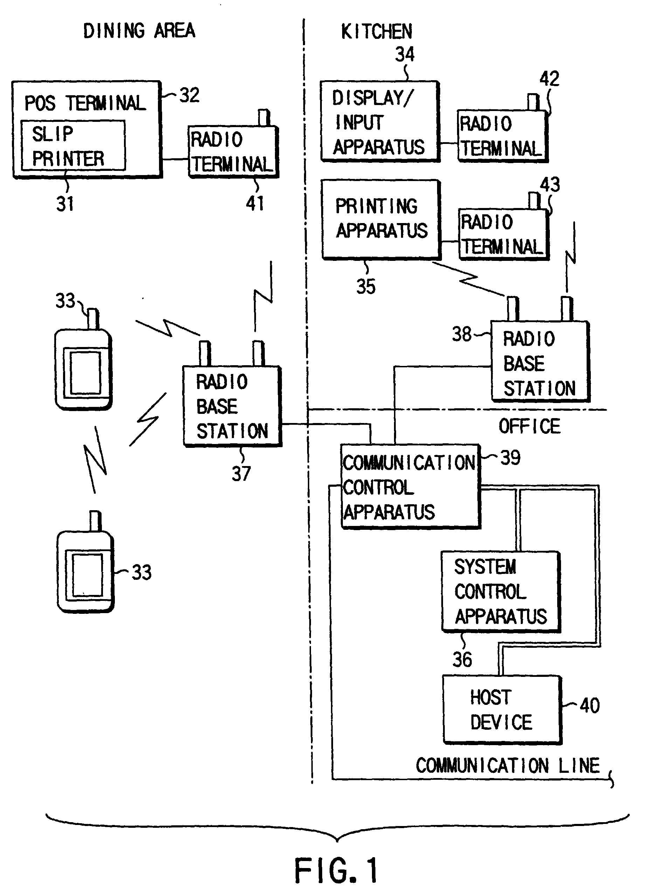

FIG. 1 is a block diagram showing the structure of the entire system. A POS (Point of Sales) terminal 32 is situated on a dining area of a restaurant. The POS terminal 32 is disposed on a check-out counter at a payment settlement section, and it stores sales information in a storage unit and manages the sales information and includes a slip printer 31 for printing and issuing slips. Servers in the dining area carry radio portable terminals 33 for inputting and radio-transmitting order information.

In a kitchen for cooking, a display/input apparatus 34 and a printing apparatus 35 are disposed. In the display/input apparatus 34, a display apparatus for displaying order information and an input apparatus for inputting completion or deletion of order information are integrated. The printing apparatus 35 prints order information and prints and issues a bill. The display/input apparatus 34 and printing apparatus 35 constitute order information notification means for notifying a worker of the order information. The display/input apparatus 34 may comprise a display apparatus and an input apparatus as separate components.

The office of the restaurant is provided with a system control apparatus 36 for storing and managing sales information, order information and menu information and controlling the entire system; a communication control apparatus 39 connected to two radio base stations 37 and 38, to the system control apparatus 36 via a LAN, and to the outside via a communication line; and a host device 40, connected to the communication control apparatus 39 and system control apparatus 36 via the LAN, for performing sales management of the restaurant as a whole, etc. The radio base station 37 is disposed on the dining area, and the radio base station 38 is in the kitchen.

A radio terminal 41 for radio communication is connected to the POS terminal 32. A radio terminal 42 for radio communication is connected to the display/input apparatus 34. A radio terminal 43 for radio communication is connected to the printing apparatus 35.

The radio base station 37 radio-communicates with the radio portable terminal 33 and radio terminal 41 by using a multiplexed bidirectional radio link, for example, a full-duplex radio link. The radio base station 38 radio-communicates with the radio terminals 42 and 43 by using a multiplexed bidirectional radio link, e.g. a full-duplex radio link. The radio connection between the radio base station 37 and the radio terminal 41 connected to the POS terminal 32 is constantly maintained.

The system control apparatus 36 is a device similar to an ordinary personal computer and controls communication between the devices. The display/input apparatus 34 has a touch-panel type display/input function. The display/input apparatus 34 displays a current state of orders and performs input of completion or deletion of ordered food by touching the touch-panel.

The communication control apparatus 39 controls the radio base stations 37 and 38. The radio portable terminal 33 is carried by the server and has an order entry function for entering customer's order information and radio-transmitting it to the radio base station 37; an inquiry function for sending a command to the system control apparatus 36 via the radio base station 37 and communication control apparatus 39 to inquire of all current order information, menu information or sales data; and a communication function for transmitting/receiving voice, images and messages with other radio portable terminal 33 and POS terminal 32.

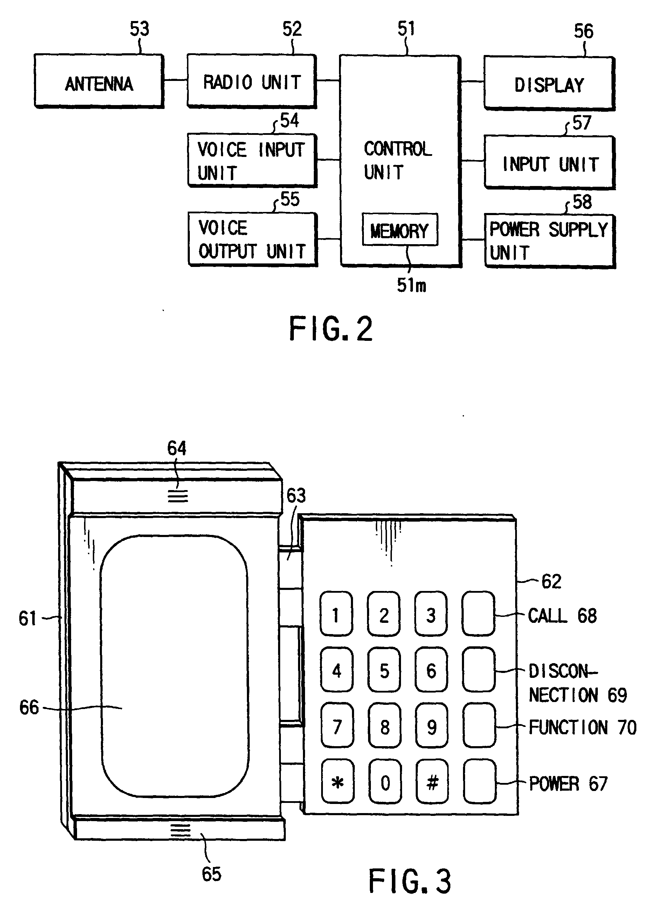

FIG. 2 is a block diagram showing the structure of the radio portable terminal 33. The radio portable terminal 33 comprises a control unit 51 for controlling the entirety of the terminal; a radio unit 52 conforming to RCR-STD28; an antenna 53 connected to the radio unit 52; a voice input unit 54 for inputting voice at the time of a call, etc.; a voice output unit 55 for outputting voice from the call destination; a display 56 of a liquid crystal type, etc.; an input unit 57 of a pen type or a touch panel type; and a power supply unit 58 such as a battery. In addition, an infrared type communication unit for communication with the outside may be provided. The control unit 51 is provided with a memory 51m. The memory 51m stores menu information sent from the system control apparatus 36, as well as telephone numbers of the radio portable terminals possessed by the manager, server A and server B.

The control unit 51 has a radio communication protocol for radio communication of the radio portable terminal 33 within the shop, and a radio communication protocol for connection with a radio base station of a PHS service provider. The same terminal can communicate with the inside and outside of the shop.

FIG. 3 shows an external appearance of the radio portable terminal 33.

The radio portable terminal 33 has an openable structure wherein a casing body 61 and a casing body 62 are coupled by means of a hinge 63. The casing body 61 is provided with a speaker 64 for a voice call, a microphone 65, and a touch panel display 66 wherein the display unit 56 and input unit 57 are integrated. The casing body 62 is provided with switches. The casing body 62 is provided with "0" to "9" keys, a "*" key and a "#" key, as well as a power key 67, a call key 68 for effecting connection in the case of reception of a voice call, a disconnection key 69 for disconnecting a voice call at the time of the end of the voice call, and a function key 70 for performing functions of volume control, etc.

As regards only the voice call reception in the communication function, connection is effected by depressing the call button 68 of the casing body 62 at the time of call reception. Disconnection is similarly effected at the time of the end of the voice call.

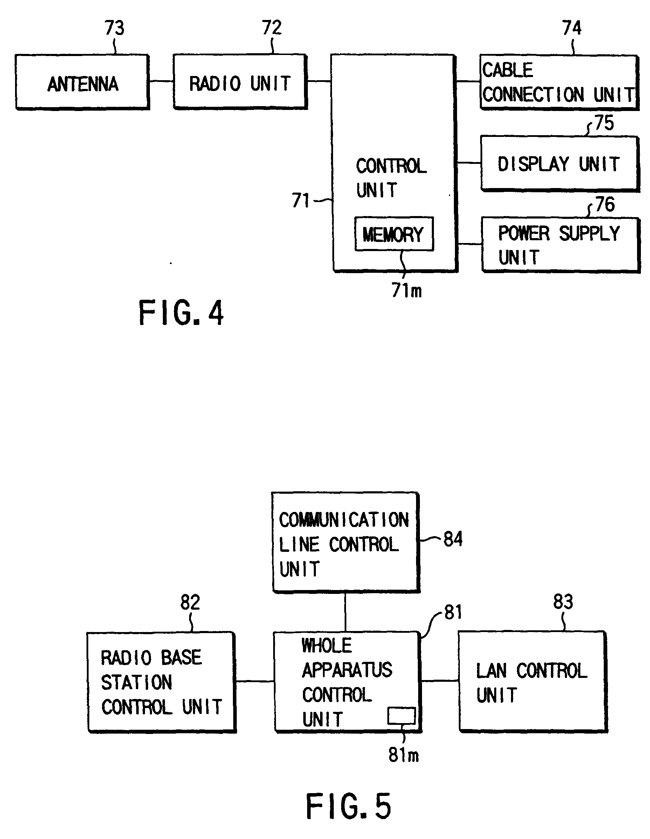

FIG. 4 is a block diagram showing the structure of the radio base station 37, 38. The radio base station 37, 38 comprises a control unit 71 for controlling the entirety of the base station; a radio unit 72 for radio communication with the radio portable terminal 33 within the shop and the radio terminals 41, 42 and 43; an antenna 73 connected to the radio unit 72; a cable connection unit 74 connected to the communication control apparatus 39 over a cable; a display unit 75 for displaying a communication state by means of an LED, etc.; and a power supply unit 76 constituted by a battery, an AC adapter, etc. The radio unit 72 conforms to RCR-STD28. The control unit 71 corresponds to the radio communication protocol for radio communication with the radio portable terminal 33 within the shop and the radio terminals 41, 42 and 43. The control unit 71 has an internal memory 71m. In the radio base station 37, the radio portable terminal 33 and radio terminal 41 capable of radio communication are registered in advance. In the radio base station 38, the radio terminals 42, 43 capable of radio communication are registered in advance.

FIG. 5 is a block diagram showing the structure of the communication control apparatus 39. The communication control apparatus 39 comprises a whole apparatus control unit 81 for controlling the entirety of the apparatus; a radio base station control unit 82 for connection with the radio base station 37, 38; a LAN control unit 83 for LAN connection with the system control apparatus 36 and a host device 40; and a communication line control unit 84 for connection with a communication line for communication control with the outside. When the communication line is, for example, a digital line such as an ISDN (Integrated Services Digital Network), the communication line control unit 84 has functions of separating three-channel time-division signals on the digital line, and converting the signals to a data format processible by the whole apparatus control unit 81, as well as a reverse conversion function. The whole apparatus control unit 81 has an internal memory 81m in which the radio portable terminal 33 and radio terminals 41, 42 and 43 capable of radio communication with the radio base station 37, 38 are registered in advance.

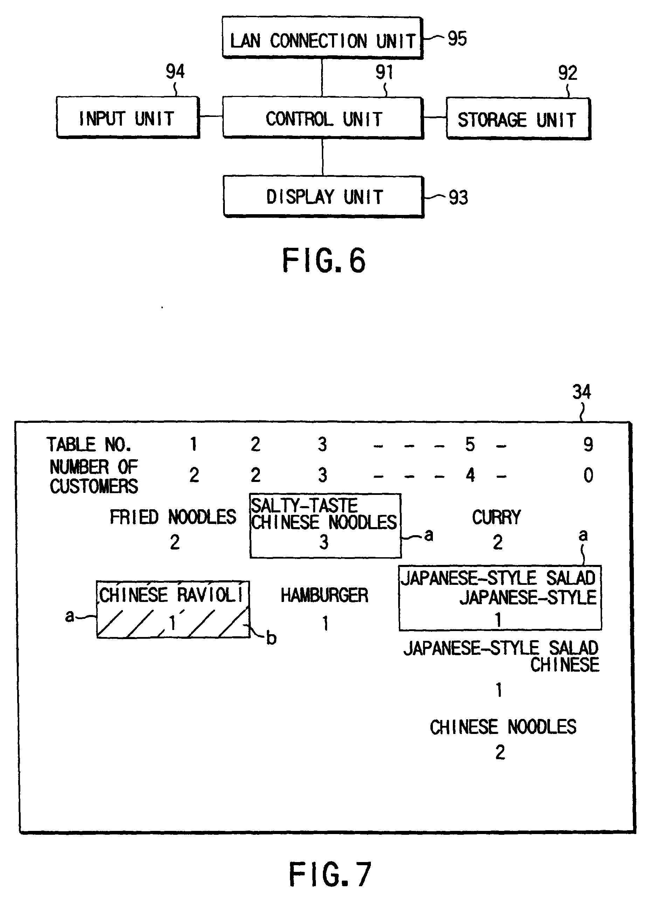

FIG. 6 is a block diagram showing the structure of the system control apparatus 36. The system control apparatus 36 has basically the same hardware structure as a personal computer or a work station. The system control apparatus 36 comprises a control unit 91 including a CPU (central processing unit), a ROM (read only memory), a RAM (random access memory), etc.; a storage unit 92 for storing data, including a hard disk, a floppy disk, a memory card, etc.; a display unit 93 such as a CRT display; an input unit 94 such as a keyboard or a mouse; and a LAN connection unit 95 connected to the LAN. The storage unit 92 stores programs for carrying out basic operations, as well as part or all of information necessary for management of the shop, such as information on the radio portable terminal 33 and radio terminals 41, 42 and 43 capable of radio communication, menu information, current order information, table information, sales information and information on servers. These information items are always updated.

FIG. 7 shows an example of display image on the display/input apparatus 34. The first line indicates a table number, the second line indicates the number of customers, and the third and following lines indicate the content of order. When the number of customers is zero, it is indicated that the table is available. When the number of customers is one or more, the presence of customer is indicated. If an order is sent by the radio portable terminal 33, the content of order is displayed by characters at the third and following lines. If the ordered food is completed in the kitchen, the characters indicating the order are surrounded by frame a. If the food is served, the hatched portion in frame a changes to a white-character display image b. If the payment by the customer is settled at the POS terminal 32, the number of customers is set at zero and the content of order is deleted.

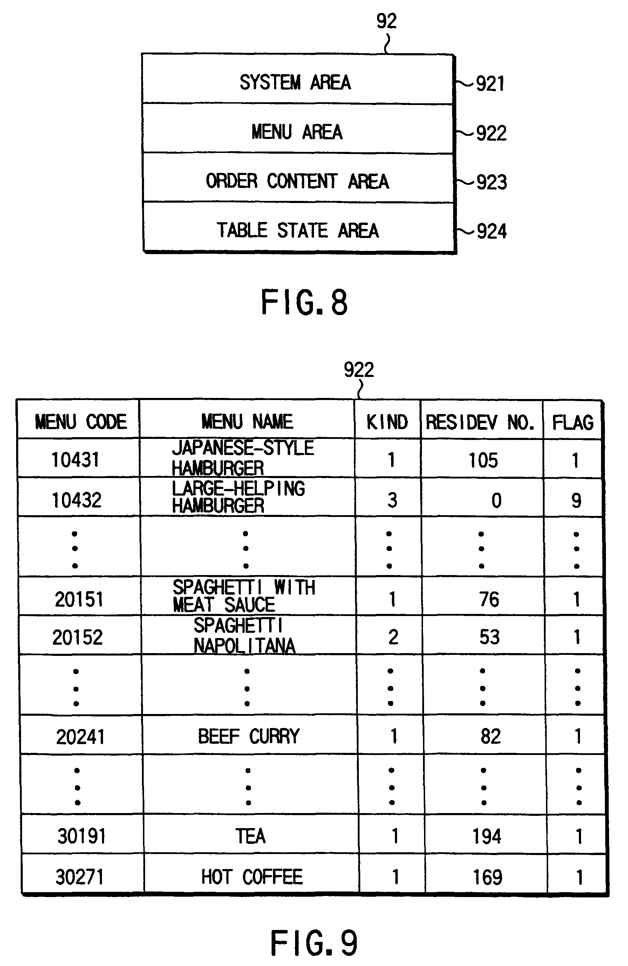

FIG. 8 shows a memory configuration of the storage unit 92 in the system control apparatus 36. The storage unit 92 comprises a system area 921 storing programs and system information, a menu area 922 storing menu information, an order content area 923 storing order contents, and a table state area 924 storing table state information.

As is shown in FIG. 9, the menu information stored in the menu area 922 comprises a menu code, a menu name corresponding to the menu code, the kind of menu, stock data, and a flag. The kind of menu is chosen from five: ordinary menu "1, season menu "2", time-limited menu "3" served in a specific time zone, special menu "4" served in a specific time, and others "5". This number indicating the kind is stored. The stock data indicates the number of current stock of each menu. If the stock of specific menu, e.g. "large-helping hamburger", is zero, the menu cannot be ordered. The number of stock is constantly updated according to orders from customers. The flag indicates the state of each menu on the basis of the current state of orders. For example, flag "1" indicates that an order is acceptable, flag "2" that an order is acceptable but a considerable amount of time is required, and flag "9" that an order is unacceptable.

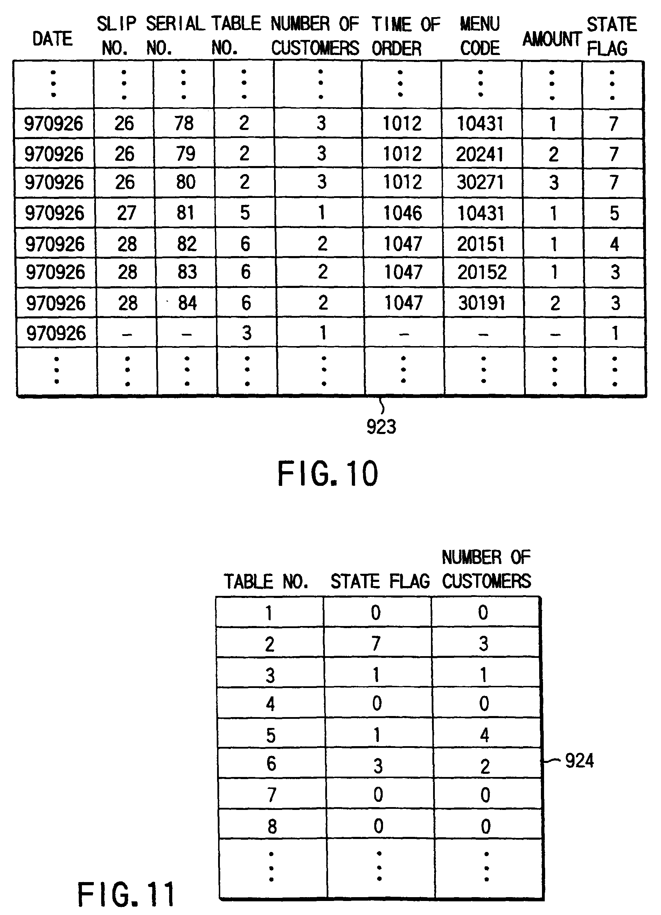

The order contents in the order content area 923 are stored in the order in which orders are radio-transmitted. As is shown in FIG. 10, the order contents comprise the date, slip number (bill number), serial number assigned to each menu, customer table number, number of customers, time of reception of menu information radio-transmitted from the radio portable terminal 33 to system control apparatus 39, menu code, and number of ordered menus and state flag assigned to each menu. The serial number may begin from "1" everyday, or every few days, as is freely set.

The state flags comprise "1" indicating the state in which the customer has sat at the table; "2" the state in which an order has been taken and sent to the system control apparatus 36; "3" the state in which the order has been sent to the kitchen to notify the kitchen; "4" the state the ordered food has been cooked in the kitchen; "5" the state in which a slip (a bill) has been issued by the printing apparatus 35; "6" the state in which the ordered food has been served; "7" the state in which all ordered foods corresponding to the slip number have been served and the slip has been handed to the customer; "8" the state in which the customer has finished the meal and settled the payment at the check-out counter; and "9" indicating the other states. The numerals of the state flags are constantly updated by various inputs to the radio portable terminals by the servers. In the case of the cancellation of orders or uncooked states, the state flag is set at "9." In this case, a memory region storing data on other causes may be provided separately.

As is shown in FIG. 11, the information stored in the table state area 924 comprises the table number, the state flag indicating the current state, and the number of customers currently sitting at the table. A memory area for storing information on the seating capacity of tables may be provided.

The state flags, which substantially correspond to the state flags in the order content area 923, comprise "0" indicating the state in which the table is available; "1" the state in which the customer sits at the table for taking of orders; "3" the state in which the order has already been taken and the customer waits for serving; "6" the state in which all the ordered foods corresponding to the slip number have been served to the customers of the table; "7" the state in which the slip has been handed to the customer; "8" the state in which the customer has finished the meal, settled the payment at the check-out counter and is waiting for clearing of the table; and "9" indicating the other states. Accordingly, the server uses the radio portable terminal 33 and confirms the content of the table state area 924 on the display 56, or the staff at the office confirms the content of the table state area 924 on the display 93, whereby the state of the table can easily be understood.

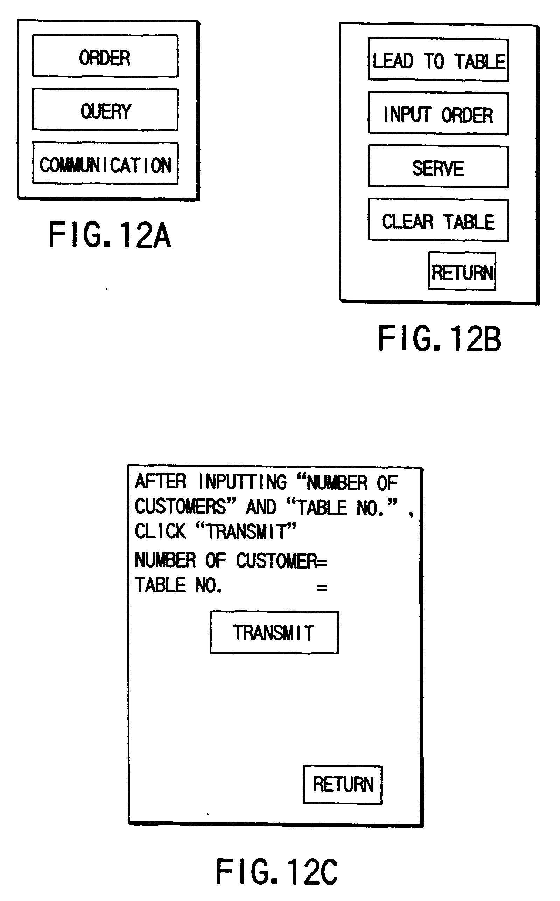

FIG. 12A shows an example of the main screen of the display 56 of radio portable terminal 33. The normal main screen displays three functions, an order function, a query function and a communication function. If "ORDER" is selected on the main screen, the screen switches to an order screen, as shown in FIG. 12B, which shows four menus, "LEAD TO TABLE", "INPUT ORDER", "SERVE" and "CLEAR TABLE."

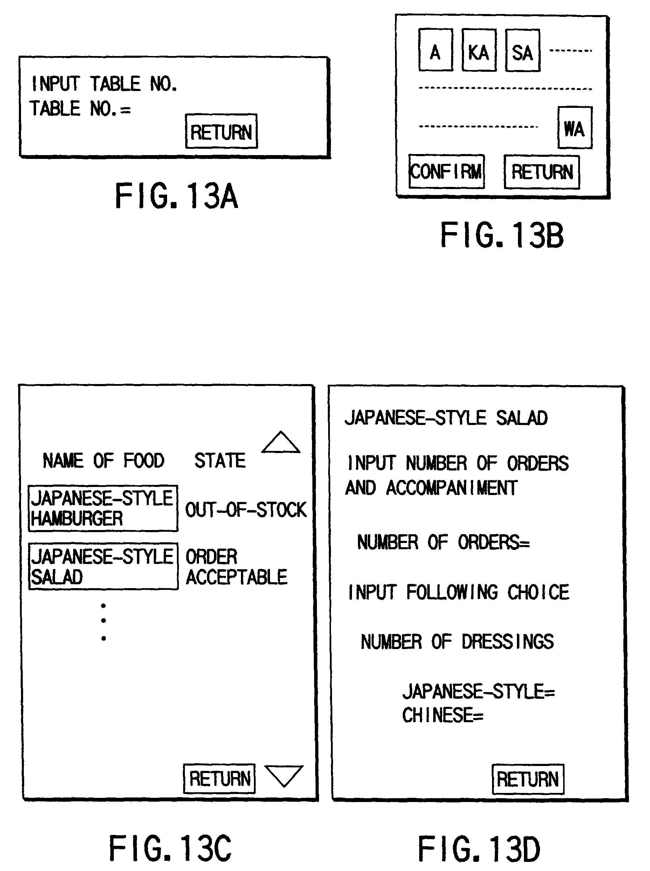

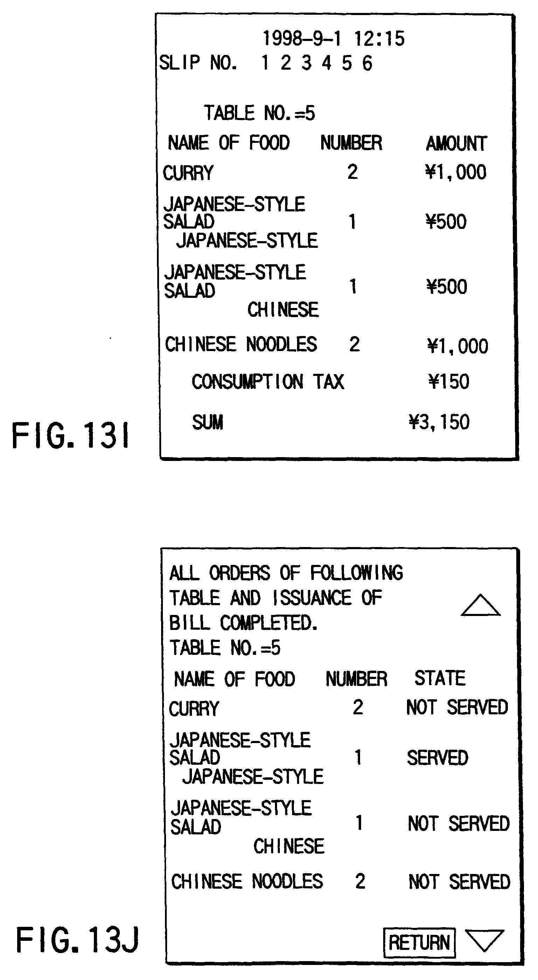

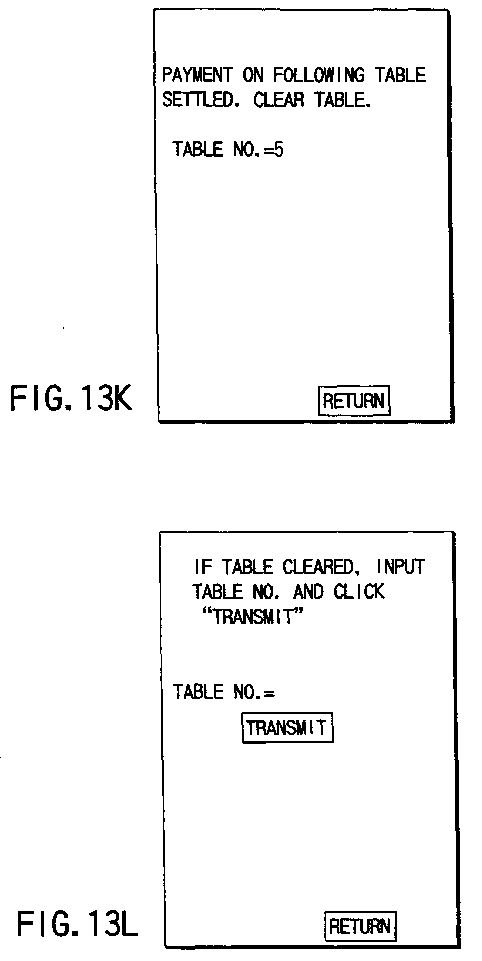

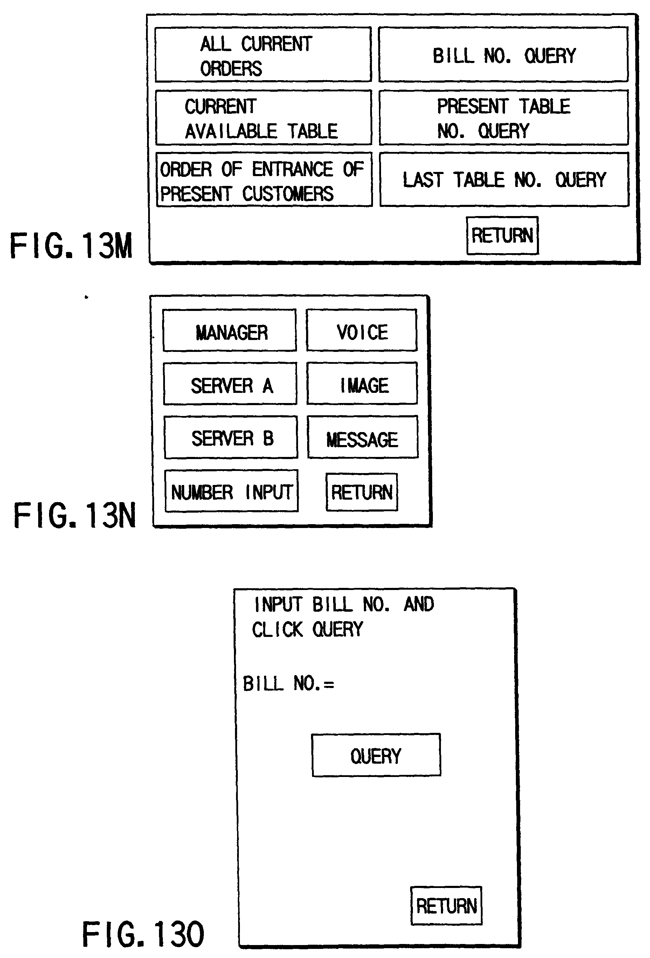

For example, if "LEAD TO TABLE" is chosen, the screen switches to a lead-to-table screen, as shown in FIG. 12C. If the table number and the number of customers are input in this state and "TRANSMISSION" is clicked, the screen changes to a screen or inputting the table number and the number of customers at the table, as shown in FIG. 13A. If the table number and the number of customers are input in this state, information on the table number and the number of customers is automatically radio-transmitted.

If "INPUT ORDER" is chosen on the order screen shown in FIG. 12B, characters "A", "KA", "SA" ... "WA" are displayed, as shown in FIG. 13B. If the characters associated with the menu are chosen in this state, the menu is displayed. If the menu is chosen, "rice or bread?", for example, is displayed. Then, the screen switches in succession to ones for selecting more detailed orders.

If "SERVE" is chosen on the order screen shown in FIG. 12B, the input stand-by state for the table number is created. If the table number is input in this state, the order information of the table is sent from the system control apparatus 36. Thus, this information is received and displayed. If the server chooses the served ordered food in this state, the completion of serving of the ordered food is radio-transmitted to the system control apparatus 36. Further, if "CLEAR TABLE" is chosen on the order screen shown in FIG. 12B, the input stand-by state for the table number is created. In this state, the table number is input.

On the other hand, if "QUERY" is chosen on the main screen shown in FIG. 12A, the screen switches to a query screen shown in FIG. 13M, displaying six menus, "ALL CURRENT ORDERS", "CURRENT AVAILABLE TABLE", "ORDER OF ENTRANCE OF PRESENT CUSTOMERS", "BILL NO. QUERY", "PRESENT TABLE NO. QUERY" and "LAST TABLE NO. QUERY." If "ALL CURRENT ORDERS" is chosen, all information currently displayed on the display/input apparatus 34 is sent from the system control apparatus 36 to the radio portable terminal 33 via the communication control apparatus 39 and radio base station 37. This information is received and displayed by the radio portable terminal 33.

If "CURRENT AVAILABLE TABLE" is chosen, information on the currently available table is sent from the system control apparatus 36 to the radio portable terminal 33 via the communication control apparatus 39 and radio base station 37. This information is received and displayed by the radio portable terminal 33.

If "ORDER OF ENTRANCE OF PRESENT CUSTOMERS" is chosen on the query screen in FIG. 13M, the information on the time of entrance of customers, the table number and the number of customers is sent from the system control apparatus 36 to the radio portable terminal 33 via the communication control apparatus 39 and radio base station 37 according to the order of entrance of customers. This information is received and displayed by the radio portable terminal 33. It is thus possible to estimate which table will become next available on the basis of the time of entrance of customers and the condition of serving of foods.

If "BILL NO. QUERY" is chosen on the query screen in FIG. 13M, the screen switches to a bill No. query screen shown in FIG. 13O. If the bill number is input in this state and "QUERY" is input, the order information corresponding to the bill number is sent from the system control apparatus 36 to the radio portable terminal 33 via the communication control apparatus 39 and radio base station 37. This information is received and displayed by the radio portable terminal 33. This display is used, for example, when the customer has inquired after settlement of payment. If "PRESENT TABLE NO. QUERY" is chosen on the

query screen in FIG. 13M, the input stand-by state for the table number is created. If the table number is input in this state, the order information of the present table number is sent from the system control apparatus 36 to the radio portable terminal 33 via the communication control apparatus 39 and radio base station 37. This information is received and displayed by the radio portable terminal 33.

If "LAST TABLE NO. INQUERY" is chosen on the query screen in FIG. 13M, the input stand-by state for the table number is created. If the table number is input in this state, the order information, the time of entrance and the time of exit relating to the customer preceding the present customer of the table number is sent from the system control apparatus 36 to the radio portable terminal 33 via the communication control apparatus 39 and radio base station 37. This information is received and displayed by the radio portable terminal 33.

On the other hand, if "COMMUNICATION" is chosen on the main screen in FIG. 12A, the screen switches to a communication screen, as shown in FIG. 13N, for inputting a communication destination of "MANAGER", "SERVER A" or "SERVER B" along with "NUMBER INPUT", and a communication method of "VOICE", "IMAGE" or "MESSAGE". If the communication destination and the communication method are chosen, the corresponding screen is displayed in turn. For example, if the server B chooses "MANAGER" as the destination and chooses "VOICE" as the communication method, the radio portable terminal 33 performs setting operations to indicate the telephone number of the radio portable terminal possessed by the "MANAGER" and to specify the voice, and sends signals according to RCR-STD28. The radio portable terminal 33 is connected to the radio portable terminal possessed by the "MANAGER" via the radio base station 37. Thus the server B and the manager can communicate in the voice mode. Similar operations are also performed with respect to the connection to other destination and the selection of the communication mode.

The radio portable terminal 33 informs the system control apparatus 36 that the customer sat at the table. A first or a second set time is provided in the time period until the server takes an order from the customer after the customer sat at the table, in the time period until the server serves the ordered food after he/she took the order, or in the time period until payment settlement is finished after the food was served. If the set time is over, the system control apparatus 36 automatically notifies the radio portable terminal 33 and display/input apparatus 34 of the expiration of the set time. Accordingly, even if the server has forgotten to do the routine work, he/she will be notified. Thus, the exact and efficient work of the server is ensured, and, for example, a delay of serving can be properly explained to the customer without causing unpleasant feeling to the customer and fine services can be provided to the customer.

The radio specifications according to RCR-STD28 are the second-generation cordless phones standard using 1.9 GHz band frequencies. Four-channel 32kbps full-duplex links are constituted with one carrier by TDMA-TDD (Time Division Multiple Access Time Division Duplex). Other than the voice communication function, an automatic response mode is chosen on the reception side and retransmission is automatically performed during a call. In addition, information communication other than the communication function is performed according to deemed voice and PIAFS (PHS Internet Access Forum Standard).

A description will now be given of a series of operations of the order data management system in a case where menu information is stored in the system control apparatus 36 and no menu information is set in the radio portable terminal 33.

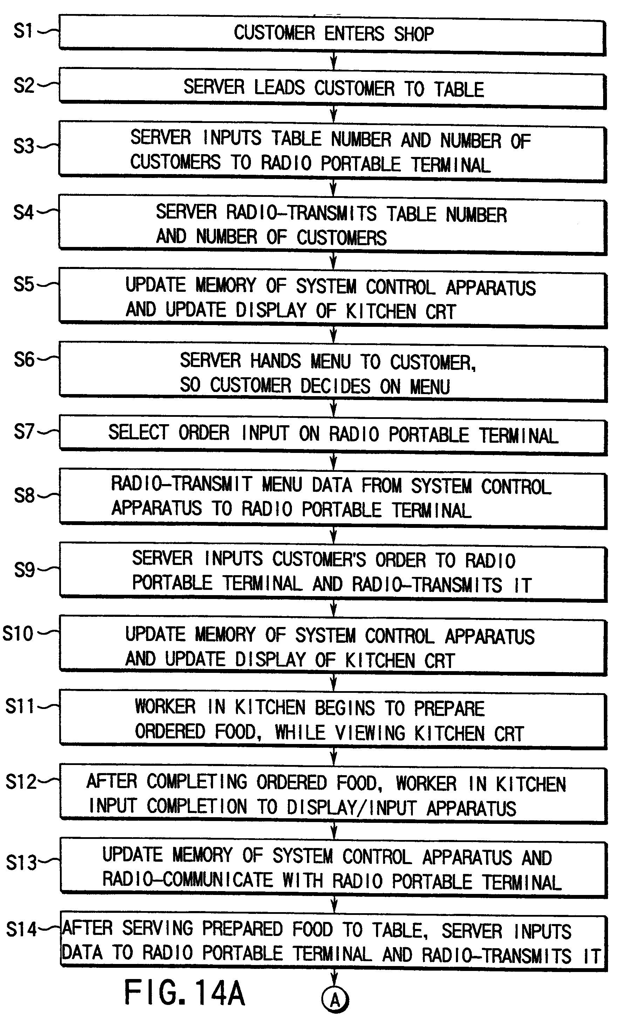

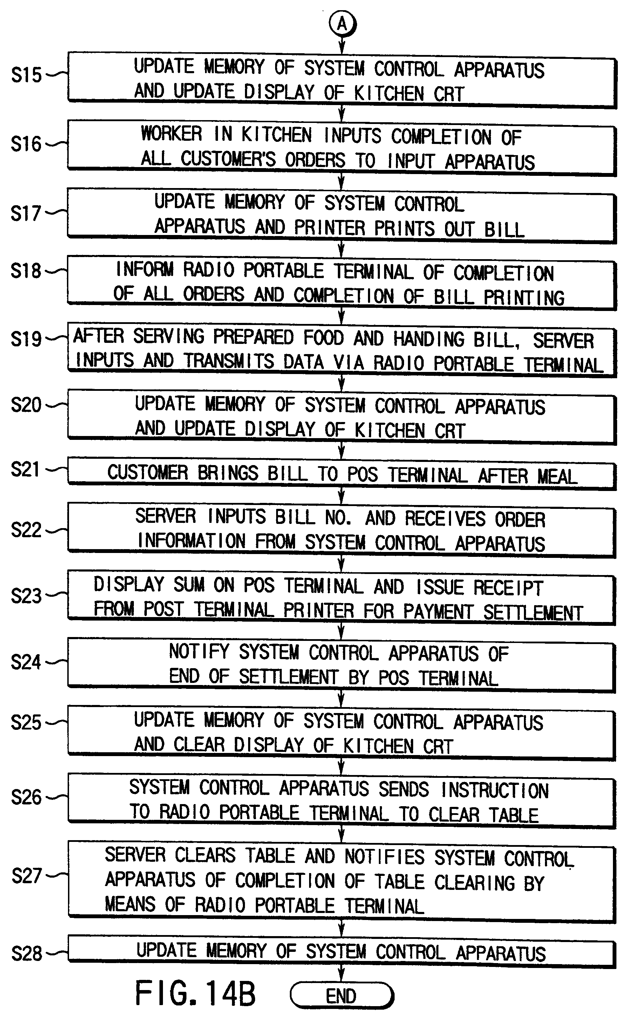

As is illustrated in FIGS. 14A and 14B, if a customer enters the shop in S1, the worker (server) carrying the radio portable terminal 33 operates the radio portable terminal 33, as described above. In S2, the server checks current available table information on the radio portable terminal 33 by the "CURRENT AVAILABLE TABLE" function, and chooses the table on the basis of the number of customers who came in and the necessity of specifying smoking/non-smoking seats. Thus, the server leads the customer to the table. In S3, the server inputs the table number and the number of customers to the radio portable terminal 33. In S4, the server radio-transmits the input table number and the number of customers to the radio base station 37. For example, the server inputs the number of customers as being 4 and the table number as being 5 on the screen shown in FIG. 12C, and inputs "TRANSMISSION". Thus, the input table number and the number of customers are radio-transmitted.

In S5, the system control apparatus 36 receives information on the table number and the number of customers received by the radio base station 37 and updates the content of the memory. Specifically, the table number, the number of customers and the flag are stored in the order area in the storage unit 92, and the corresponding number of customers and flag in the table state area 924 are updated. In the case of the above example, in FIG. 11, the number of customers associated with table number 5 is updated to 4, and the state flag is updated to 1 (indicating the state in which the customers have sat at the table to wait for taking of orders). In addition, the display of the portion corresponding to the table on the display/input apparatus 34 installed in the kitchen is updated.

In S6, the server shows the menu to the customer and the customer decides on the menu. In S7, the server operates the radio portable terminal 33 and selects and inputs the "INPUT ORDER" on the order screen in FIG. 12B. The selected information is radio-transmitted to the system control apparatus 36 via the radio base station 37.

For example, when the server takes an order from the customer at the table 5, the server chooses the "INPUT ORDER" on the screen shown in FIG. 12B. The screen changes to the screen in FIG. 13A, and the server inputs 5 as the table number. Then, if the customer who has sat at the table 5 orders Japanese-style salad, the server selects "WA" on the screen shown in FIG. 13B and the radio portable terminal 33 displays menus with the initial character "WA" and indicates whether they are acceptable, as shown in FIG. 13C. If the server selects "JAPANESE-STYLE SALAD" from the displayed menus, the screen changes to the screen shown in FIG. 13D, and he/she inputs the number of orders. Depending on menus, selective input for accompaniment is requested. In the case of Japanese-style salad, the number of dressings is input.

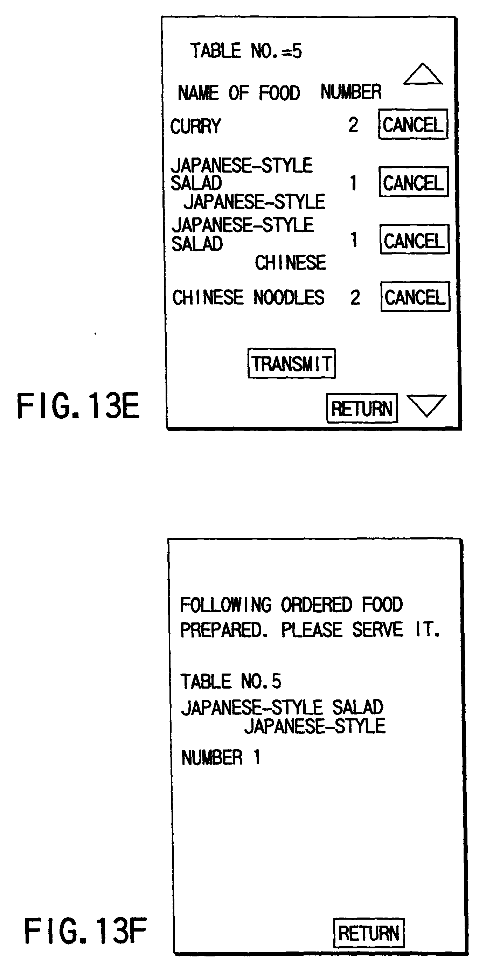

Then, the screen changes to that shown in FIG. 13B once again. If a further order is taken, the same operation is repeated. If the order input is completed, the server selects "CONFIRMATION" on the screen in FIG. 13B and the screen changes to a confirmation screen shown in FIG. 13E. The content of the input order is displayed on the radio portable terminal 33. The server confirms the content of the order to the customer by word of mouth. If the content of the order is altered, the order is canceled, re-input or re-confirmed by screen operations. If the confirmation is finished, the "TRANSMISSION" is clicked and the order content is radio-transmitted.

If the system control apparatus 36 has received order information, it updates the memory in S10 and updates the associated display content on the display/input apparatus 43. In addition, the order is sent to the kitchen to request cooking. For example, in FIG. 7, "Curry 2", "Japanese-style salad 2" and "Chinese noodle 2" are displayed at the position of table number 5. In the kitchen, in S11, the cook prepares the ordered food by viewing the display content on the display/input apparatus 43. In S12, if the preparation of the ordered food is finished, the cook effects display in frame a. In S13, the system control apparatus 36 updates the memory content in accordance with completion of ordered foods. In addition, it informs by radio communication the radio portable terminal 33 of the completion of the ordered food and requests serving thereof. For example, if the preparation of Japanese-style salad at table 5 is completed and the cook inputs completion of cooking to the display/input apparatus, the system control apparatus 36 radio-transmits information to the radio portable terminal 32 and the radio portable terminal 33 effects display, as shown in FIG. 13F.

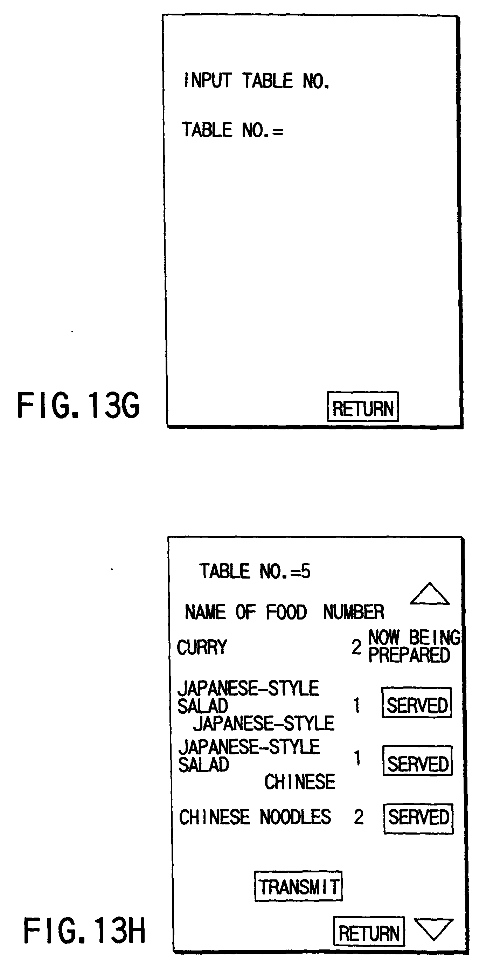

In S14, the server serves the prepared ordered foods and, if it is finished, the server inputs the completion of serving to the radio portable terminal 33 for radio communication with the system control apparatus 36. According to the above example, if the screen changes to that shown in FIG. 13G and table number "5" is input, the current serving state of the table 5 is transmitted from the system control apparatus 36 and the screen is switched to that shown in FIG. 13H. If the server completes the serving of Japanese-style salad, he/she clicks "SERVING FINISHED" at the location of "JAPANESE-STYLE SALAD" and transmits information on completion of serving to the system control apparatus 36. In FIG. 13H, an example is shown in which curry is still being prepared and completion of serving is not displayed. If the input of completion of serving is radio-transmitted to the system control apparatus 36, the system control apparatus 36 updates the memory content in S15 and radio-transmits information to the display/input apparatus 34, thereby updating display on the display/input apparatus 34.

If all ordered foods corresponding to the slip are completed in the kitchen and the cook inputs completion of the last ordered food to the display/input apparatus 34 in S16, as in the above example, the system control apparatus 36 determines in S17 that the preparation of ordered foods corresponding to the slip is completed and updates the memory content. Further, it transmits the print data of the slip, i.e. a bill to the printing apparatus 35, and instructs issue of the bill. FIG. 13I shows an example of the printed bill. In S18, the radio portable terminal 33 is notified of the completion of all ordered foods and printing of the bill, and the server is requested to serve the last ordered food and hand the bill.

In S19, the server serves the last ordered food and hands the bill to the customer. The server inputs completion of serving to the radio portable terminal 33 and radio-communicates with the system control apparatus 36. In step S20, the system control apparatus 36 updates the memory and also the display on the display/input apparatus 34.

In step S21, if the client finishes the meal, he/she goes to the POS terminal 32 at the check-out counter with the bill and hands the bill to the worker. The worker input the bill number to the POS terminal 32. Thereby, the POS terminal 32 receives the order information from the system control apparatus 36. In step S23, the POS terminal 32 displays the amount of payment and the slip printer 31 issues a receipt. The worker receives the payment and the payment settlement processing is performed.

If the payment settlement is finished, the POS terminal 32 notifies the system control apparatus 36 of the end of payment settlement in step S24. In step S25, the system control apparatus 36 updates the memory and causes the display/input apparatus 34 to clear the associated display. Then, in step S26, the system control apparatus 36 notifies the associated radio portable terminal 33 of the completion of the payment settlement and instructs the clearing of the table. According to the above example, the radio portable terminal 33 shows an image as shown in FIG. 13K. In S27, if the server clears the table, of which the payment settlement was finished, and the clearing is finished, the server notifies the system control apparatus 36 of the completion of the clearing. For example, if "CLEAR TABLE" in FIG. 12B is changed to the screen of FIG. 13L, the table number is input and "TRANSMIT" is clicked, the completion of the clearing of table 5 is transmitted to the system control apparatus 36. In S28, the system control apparatus 36 updates the memory and the series of operations of the order data management system are finished. In the restaurant, accordingly, these operations are repeated as new customers have come in.

In the above-described structure, when the customer has come in the restaurant and the server takes an order, the menu information is transmitted from the system control apparatus 36 to the radio portable terminal 33 by performing order selection on the radio portable terminal 33. However, the structure is not limited to this. The menu information may be transmitted from the system control apparatus 36 to the radio portable terminal 33 in advance. The radio portable terminal 33 stores this menu information in the internal memory and uses it. Only when a change of menu occurs, the change information is received from the system control apparatus 36 and the content of the internal memory is partly changed.

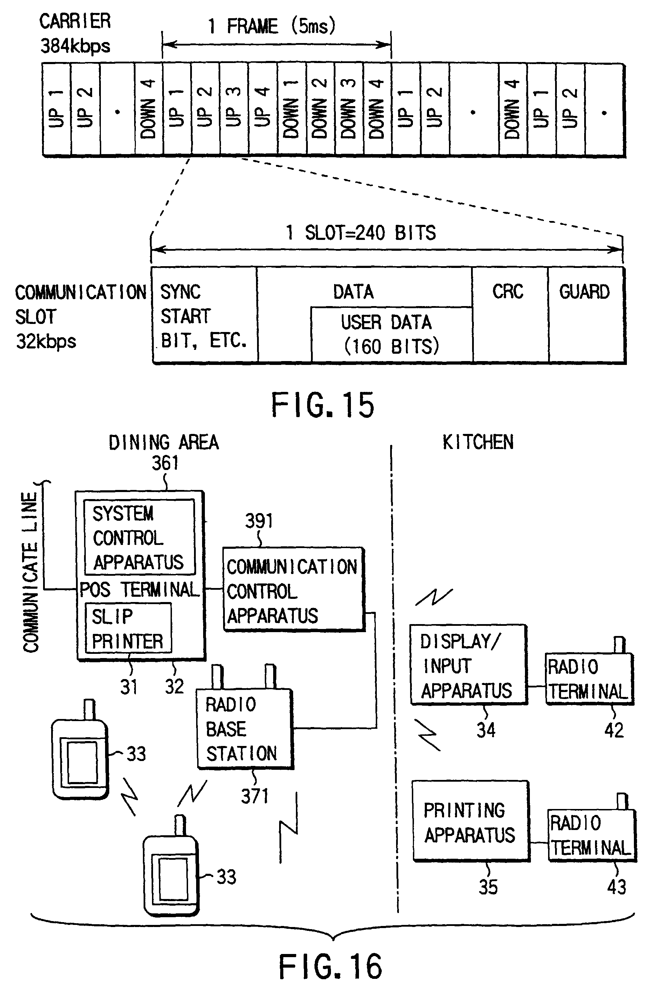

FIG. 15 is a view for describing the radio communication system. As described in RCR-STD28, this system is a time division duplex system and a raw transmission speed in one frequency is 384 kbps. This one frequency is divided into eight slots by time division. Four slots are used for up-links, the other four for down-links. One slot comprises 240-bit date, and 160 bits are assigned to user data. Since 160-bit user data can be transmitted in one slot, 32 kbps full-duplex four channels can be constituted in one frequency.

Accordingly, a plurality of radio portable terminals 33 and radio terminal 41 can communicate with the radio base station 37 at the same time by 32 kbps full-duplex communication. Even if the transmission data amount is increased, collision of electric waves, transmission wait, etc. can be reduced. Even if all communication channels are occupied, the user of the radio portable terminal, e.g. the server, may complete the input operation without considering the occupation. Once the radio portable terminal 33 detects an available channel, it will automatically radio-transmits the order information to the system control apparatus 42. Thus, the order reception work is completed.

In the radio portable terminal 33, the control unit 51 includes the memory 51m. Each time the customer order input is begun, latest menu information is received from the system control apparatus 36 by radio-communication and stored in the storage section. After the order input is completed, the menu information in the storage section is deleted. Thus, even if a menu change occurs in some time zone in one day or in some season, or due to some other reason, the latest menu information is obtained each time an order is to be input. Thus, the work for coping with a menu change is efficiently performed.

Since the menu information is deleted after the order reception work is finished, the storage section in the radio portable terminal 33 can be efficiently used. This leads to a reduction in size, power consumption and cost of the radio portable terminal 33. Moreover, since the menu information is received at the time of beginning the order input and then the order input operations are performed for the customer, even if a menu change occurs in the system control apparatus 36 during the order input for the same customer, such a menu change is not effected in the radio portable terminal 33 and no problem will arise. Therefore, the server can operate the radio portable terminal without considering the menu change.

In the order data management system having the above structure, the POS terminal 32 disposed on the dining area side, and the display/input apparatus 34 and printer apparatus 35 disposed in the kitchen are connected to the radio terminals 41, 42 and 43, respectively, and radio-communicate with the radio base stations 37 and 38 connected to the communication control apparatus 39. Thus, when the layout of the dining area or the kitchen is altered, the POS terminal 32, display/input apparatus 34 and printer apparatus 35 can be easily moved and the work for changing the wiring is not needed. Accordingly, the change of the layout can be performed in a short time at low cost.

Moreover, since the multiplexed bidirectional radio communication, such as time-division duplex with a plurality of full-duplex channels, as adopted in the embodiment, is used, the system control apparatus 36, for example, can transmit print data to the printer apparatus 35 wired to the radio terminal 43 at the same time as the reception of the order from the radio portable terminal 33. Thus, the wait time for transmission is short, collision of electric waves is reduced, and the work can be efficiently performed. Moreover, the number of radio portable terminals and radio terminals to be used can be easily increased.

The communication protocol described in RCR-STD28 is related to line switching. Thus, for example, before transmitting order information from the radio terminal 41 to the radio base station 37, it is necessary to first set the telephone number of the radio base station 37 on the radio terminal 41 and establish radio connection between the radio terminal 41 and radio base station 37. Accordingly, a wait time of several seconds is required if the control is performed to establish radio connection before transmitting order information from the radio terminal 41.

On the other hand, in the present embodiment, the radio terminal 41 connected to the POS terminal 32 is always radio-connected to the radio base station 37. Thus, when a request for information transmission/reception arises between the POS terminal 32 and system control apparatus 36, information can be immediately transmitted. In other words, radio transmission can be quickly performed between the POS terminal 32 and system control apparatus 36.

In this embodiment, the radio terminal 41 connected to the POS terminal 32 is always radio-connected to the radio base station 37. The radio-connection mode is not limited to this, and the radio terminal 42 connected to the display/input apparatus 34 or the radio terminal 43 connected to the printer apparatus 35 may always be radio-connected to the radio base station 37.

Besides, if plural slots in the time-division duplex system are assigned to this communication system, the transmission rate can be increased a number of times corresponding to the number of assigned slots, and the radio-communication can be performed more quickly.

Since the radio portable terminal 33 and radio terminal 41, 42, 43 radio-communicate with the radio base station over full-duplex radio links, the radio portable terminal 33, for example, can be provided with a query function for receiving information, such as available table information or current remaining order information, which is necessary for the server carrying the radio portable terminal 33, at the same time as radio-transmission of order data, without influencing the radio transmission of order data. Thus, the work efficiency of the server can be enhanced, and the server can provide finer services to the customer. The servers can communicate with one another within the shop with use of radio portable terminals and can thus carry out works quickly without deteriorating the atmosphere within the shop.

Since the time-division duplex system is used, the radio base station 37 has plural full-duplex channels. Thus, the radio base station 37 can communicate with plural radio portable terminals and radio terminals at the same time. Accordingly, even if the number of radio portable terminals and radio terminals increases or the rate of use of radio communication increases as the radio transmission amount of each terminal increases, collision of electric waves or transmission wait time will not increase.

A second embodiment of the present invention will now be described with reference to FIG. 16. The structural components common to those in the first embodiment are denoted by like reference numerals and a description will be given of different portions alone.

In this embodiment, an order data management system is disposed in a restaurant comprising only the dining area and kitchen. As is shown in FIG. 16, a system control apparatus 361 is provided within the POS terminal 32. The system control apparatus 361, however, may be externally connected to the POS terminal 32.

A communication control apparatus 391 is connected to the system control apparatus 361, and a radio base station 371 is connected to the communication control apparatus 391. The communication control apparatus 391 and radio base station 371, however, may be incorporated in the POS terminal 32 along with the system control apparatus 361. Like the radio base station 37, 38 in the first embodiment, the radio base station 371 radio-communicates with each radio portable terminal 33, the radio terminal 42 connected to the display/input apparatus 34 and the radio terminal 43 connected to the printer apparatus by the same radio communication method using full-duplex radio links and time-division slots.

In the above structure, the system control apparatus 361 is provided within the POS terminal 32, the communication control apparatus 391 is connected to the POS terminal 32, and the radio base station 371 is connected to the communication control apparatus 391. Thereby, the POS terminal 32 provided on the dining area side communicates with the display/input apparatus 34 and printing apparatus 35 disposed in the kitchen. Thus, when the layout of the dining area or the kitchen is altered, the POS terminal 32, display/input apparatus 34 and printer apparatus 35 can be easily moved and the work for changing the wiring, etc. is not needed. Accordingly, the change of the layout can be performed in a short time at low cost.

The communication among the radio base station 371, radio portable terminals 33 and radio terminals 42, 43 is the same as that in the first embodiment. Therefore, the same advantageous effect as in the first embodiment can be obtained.

In the above-described first and second embodiments, the display/input apparatus 34 and printing apparatus 35 are separately provided and individually connected to the radio terminals. The connection manner, however, is not limited to this. The input apparatus 34 and printing apparatus 35 may be wired, and one of them may be connected to the radio terminal.

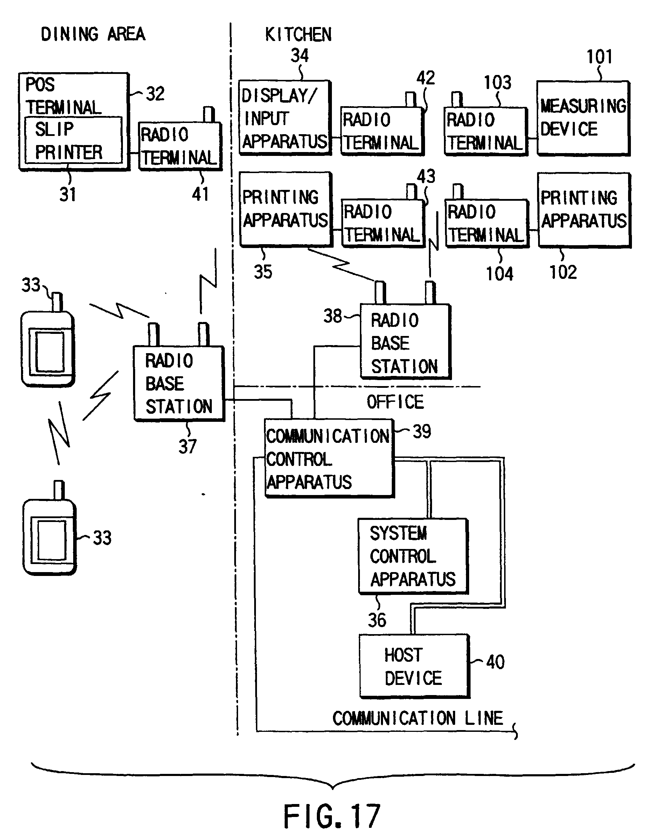

A third embodiment of the present invention will now be described with reference to FIGS. 17 to 21.

The structural components common to those in the first and second embodiments are denoted by like reference numerals, and a description will be given of different portions alone.

This embodiment is applicable to cases where take-out food is served and the stock of cooking materials needs to be checked. As is shown in FIG. 17, the system of the third embodiment comprises, in addition to the structure of the first embodiment, a measuring device 101, on which cooking materials are placed, for measuring the weight of the stocked cooking materials, and a printing apparatus 102 for printing a label with the name of food and a bar-code to be attached to the take-out food when the take-out food has been ordered. For example, Japanese-style pizza is stacked on the measuring device 101. A radio terminal 103 for radio communication is connected to the measuring device 101, and a radio terminal 104 for radio communication is connected to the printing apparatus 102.

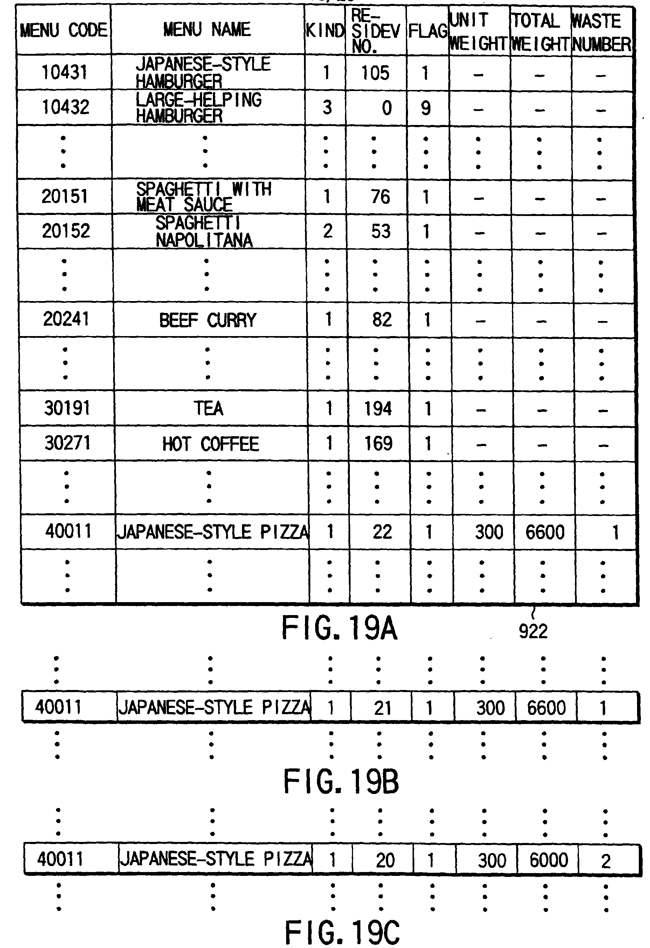

As is shown in FIG. 19A, the menu area 922 of the storage unit 92 in the system control apparatus 36 comprises a preknown unit weight of such menus as Japanese-style pizza, whose weight can be calculated on the basis of the number thereof; a total weight measured by the measuring device 101 and radio-transmitted from the radio terminal 103; a stock number calculated by dividing the total weight by the unit weight; and the number of material waste due to failure in cooking or serving, represented by a difference between a residue number calculated by subtracting the number of orders of the present day from the residue number of the previous day and a residue number calculated from the total weight and unit weight.

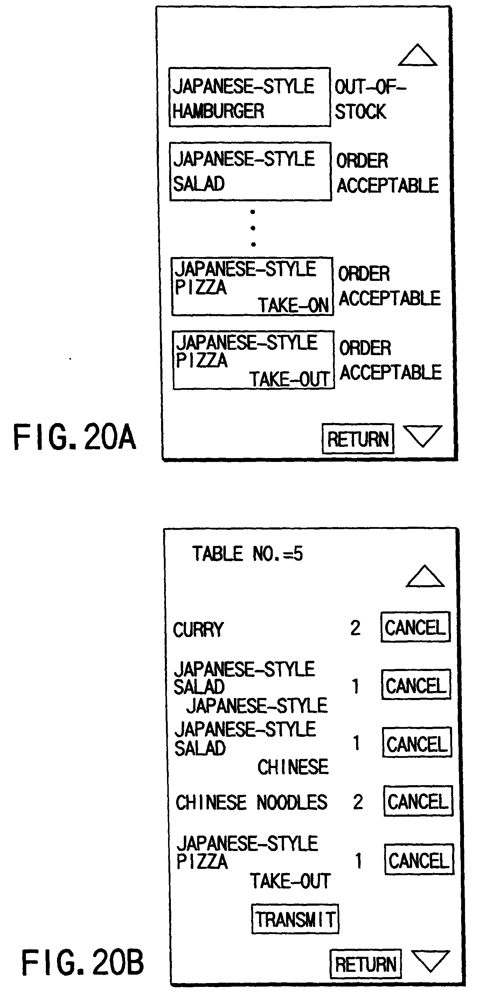

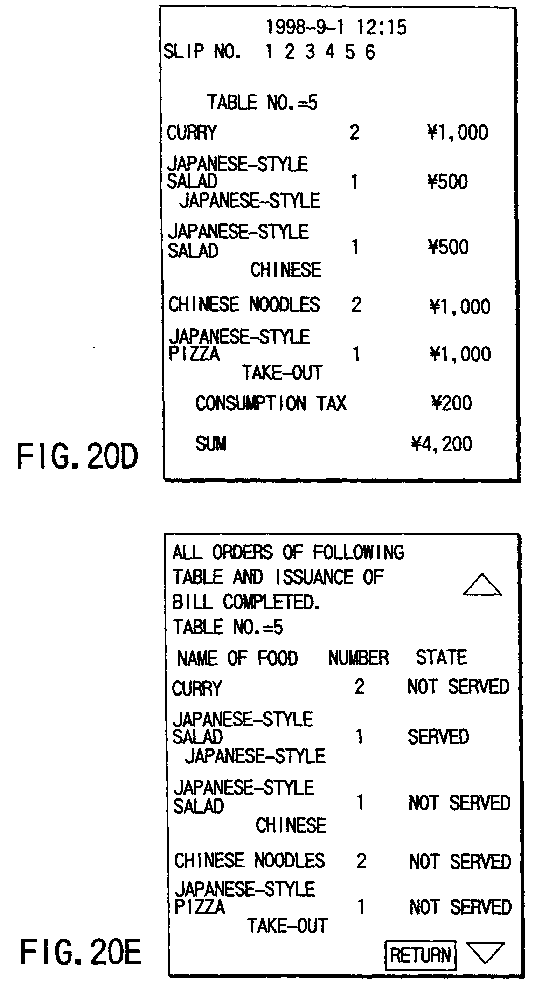

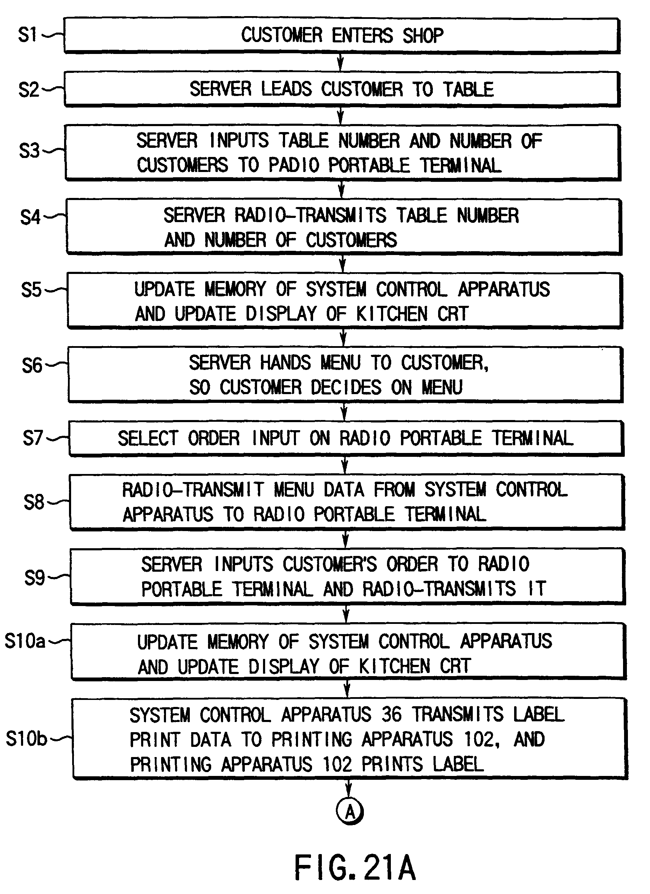

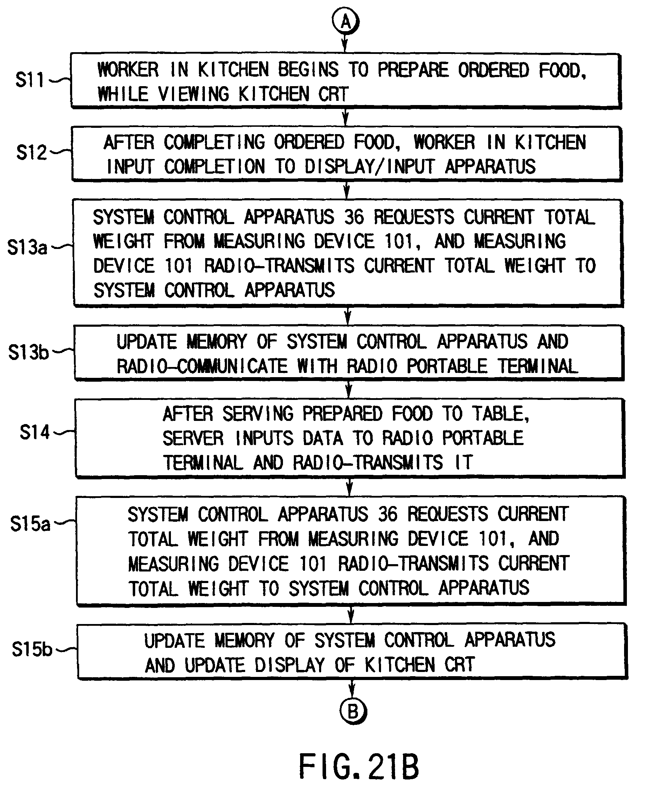

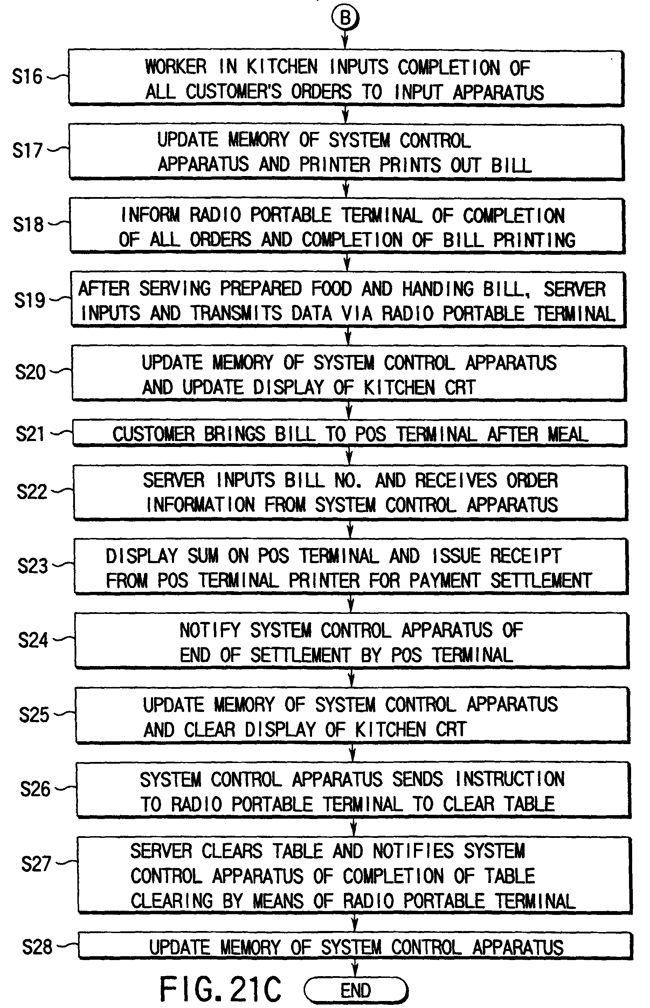

A series of operations will now be described with reference to FIGS. 20A to 20E, 21A and 21B.

As is shown in FIGS. 21A and 21B, a customer enters the shop in step S1, and the server leads the customer to the table. In S3, the server inputs the table number and the number of customers to the radio portable terminal 33. In S4, the server radio-transmits the input table number and the number of customers. In S5, the system control apparatus 36 updates the content of the memory and the content of display on the kitchen CRT. In S6, the server shows the menu to the customer and the customer decides on the menu. In S7, the server operates the radio portable terminal 33 and selects and inputs the "INPUT ORDER" in FIG. 12B, following "ORDER" in FIG. 12A. The menu data is radio-transmitted from the system control apparatus 36 to the radio portable terminal 33. In S9, if the customer orders take-out of Japanese-style pizza, the server selects "WA" on the screen in FIG. 13B and the screen switches to that shown in FIG. 20A. After the server has selected "JAPANESE-STYLE PIZZA TAKE-OUT", he/she selects "RETURN" and the screen changes to that in FIG. 13B once again. If this is repeated and the order input is completed, the server selects "CONFIRM" in FIG. 13B and the screen switches to that in FIG. 20B. The server makes confirmation by word of mouth, and if cancellation occurs, the order input is performed once again for the purpose of confirmation. If the confirmation is finished, "TRANSMIT" is selected on the screen of FIG. 20B and the content of the order is radio-transmitted.

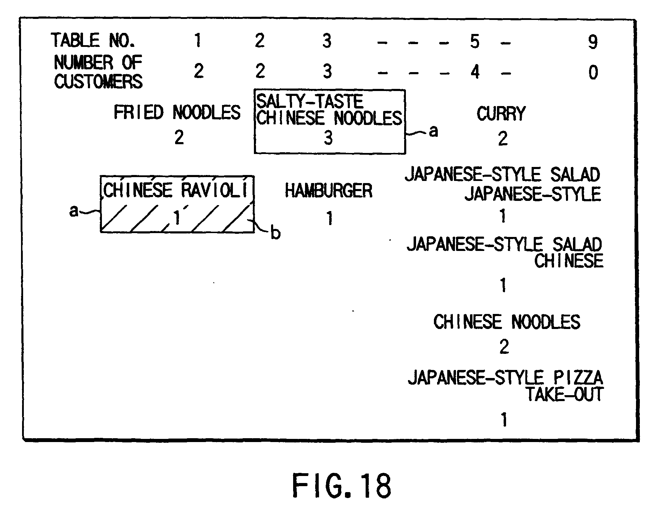

In S10a, the system control apparatus 36 radio-transmits the received order content to the kitchen CRT, and the screen of the kitchen CRT is updated, as shown in FIG. 18, and the memory content is updated. As regards Japanese-style pizza, the memory content was as shown in FIG. 19A before updating, but "1" is subtracted from the residue number and updated to "21" as shown in FIG. 19B.

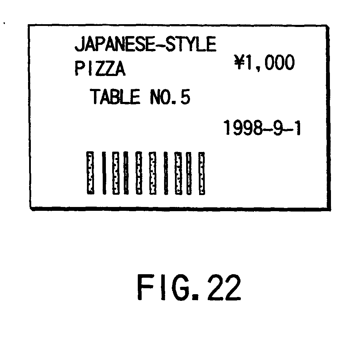

In S10b, the system control apparatus 36 radio-transmits information including the name of goods and bar-code to the printing apparatus 102 in connection with "JAPANESE-STYLE PIZZA TAKE-OUT" for the take-out food. Based on the received data, the printing apparatus 102 effects printing, for example, as shown in FIG. 22.

In S11, the cooker begins to prepare the ordered food by viewing the display of the kitchen CRT. The cooker, after completing the preparation, attaches the label printed by the printing apparatus 102 for the Japanese-style pizza.

In S12, the cooker inputs completion of the ordered food. In S13a, as regards menu "Japanese-style pizza" among menu contents, whose number is calculable from the weight, the system control apparatus 36 requests the current weight from the measuring device 101 and obtains data on the current total weight. Then, in S13b, the kind, residue amount, flag, unit weight, total weight and waste number are updated. Where the unit weight is 300 (g), the total weight is 6600 (g) and the waste number is 1 before the updating, as shown in FIG. 19B, the system control apparatus 36 requests the current total weight from the measuring device 101 when the completion of the preparation of the Japanese-style pizza has been transmitted. Then, data on the current total weight of 6000 (g) is acquired to perform updating. Subsequently, the current total weight "6000 (g)" is divided by the unit weight "300 (g)", and the current residue number "20" is calculated for updating. Since the calculated residue number is 20, compared to the residue number "21" updated at the time of order, it is determined that the cooking of one pizza failed and the waste number is updated to "2" by adding "1". FIG. 19C shows the updated memory contents. As regards other cooked foods, the memory contents are updated similarly and radio-transmitted to the radio portable terminal 33.

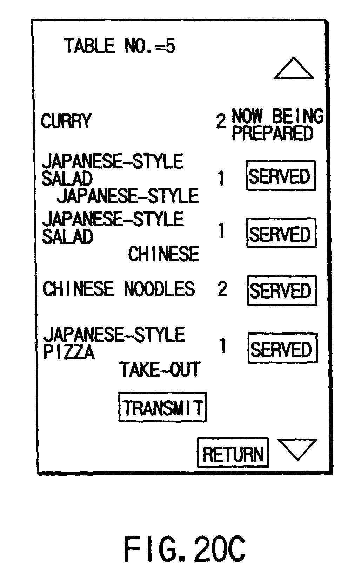

Similarly, after the server has served the cooked food to the table in S14, data is input to the radio portable terminal 33 and radio-transmitted. For example, the screen changes to that shown in FIG. 20C, and "SERVING COMPLETED" is selected for Japanese-style pizza and radio-transmitted to the system control apparatus 36.

In S15a, the system control apparatus 36 similarly requests data on the current total weight from the measuring device 101 and receives it. Then, in S15b, like the above-described process, the residue amount, total weight and waste number are calculated, the memory content is updated and the display on the kitchen CRT is updated.

In S16, if all customers' orders are completed by the worker in the kitchen and the completion is input to the input apparatus and radio-transmitted to the system control apparatus 36, the system control apparatus 36 updates the memory contents in S17 and radio-transmits the bill print data to the printing apparatus 35. Thus, the printing apparatus 35 prints the bill as shown, for example, in FIG. 20D.

Following the above, the same operations as in the other embodiments are performed.

In this embodiment, the printing apparatus 102 for producing labels can radio-communicate with the measuring device 101, and it is possible to produce the label to be attached to the take-out food and calculate the exact current residue number and waste number of the materials whose residue number is calculable from the weight. In addition, the degree of freedom of disposal of the printing apparatus 102 and measuring device 101 is increased.

In the third embodiment, the measuring device 101 for measuring the stock weight of the cooking materials and the printing apparatus 102 for printing labels to be attached to ordered take-out foods are connected to the radio terminals 103 and 104, respectively. However, the structure is not limited to this. Needless to say, the apparatus for transmitting and receiving information with the system control apparatus, etc. may be connected to the radio terminal to perform radio communication with the system control apparatus, etc.

In each of the above embodiment, the order data management system is applied to the use in restaurants. The invention, however, is not limited to this. For example, this invention is applicable to an order data management system wherein order information of a customer or an orderer is input by a radio portable terminal in a retail store or a warehouse, and the order information is sent to a worker in, e.g. a warehouse storing goods or parts, and payment settlement operations are performed by a POS terminal for the client or orderer.

### (Advantages of Invention)

According to the invention of claim 1, multiduplexed bidirectional radio communication of information is performed between the system control apparatus and either or both of the POS terminal and order information notification means. Thereby, a transmission wait time is reduced and collision of electric waves is reduced. Accordingly, works can be smoothly done. In addition, when the layout of the dining area, the kitchen, etc. is changed, rearrangement of the POS terminal and order information notification means can be made at a low cost in a short time.

According to the order data management system of claim 2, the same advantages as in claim 1 can be obtained and, in addition, the layout of the display/input apparatus for displaying and inputting the order information and the printing apparatus for printing the order information and issuing the bill can be easily changed.

According to the order data management system of claim 3, the same advantages as in claim 1 can be obtained and, in addition, the layout of the display/input apparatus for displaying and inputting the order information, the printing apparatus for printing the order information and issuing the bill, the measuring device for measuring the weight of the stock, and the printing apparatus for printing labels with names of goods and bar-codes can be easily changed.

According to the order data management system of claim 4, the same advantages as in claim 1 can be obtained and, in addition, the radio communication between the system control apparatus and the POS terminal and order information notification means can be performed quickly.

According to the order data management system of claim 5, the same advantages as in claim 1 can be obtained and, in addition, the system control apparatus is incorporated in the POS terminal, and the system can be reduced in size.

According to the order data management system of claim 6, the same advantages as in claim 1 can be obtained and, in addition, the radio communication between the radio portable terminal, radio terminal and radio base station can be quickly performed.

According to the order data management system of claim 7, the same advantages as in claim 1 can be obtained and, in addition, the radio base station can simultaneously communicate with plural radio portable terminals and radio terminals. Thus, the communication efficiency is enhanced and many radio portable terminals and radio terminals can be incorporated in the system.

According to the order data management system of claim 8, the same advantages as in claim 1 can be obtained and, in addition, the transmission rate between the radio base station and the specific radio terminal can be increased, and the radio communication can be quickly performed.

## Claims

1. An order data management system comprising:
a radio portable terminal for inputting and radio-transmitting order information;
a POS terminal for storing sales information in a storage unit and managing the sales information;
order information notification means for notifying a worker of the order information;
a system control apparatus for managing information such as the sales information and order information;
a communication control apparatus wired to the system control apparatus;
a radio terminal wired to one or both of the POS terminal and the order information notification means; and
a radio base station, wired to the communication control apparatus, for radio-communicating with the radio portable terminal and the radio terminal with use of multiduplexed bidirectional radio links,
wherein said system control apparatus transmits and receives information, by radio communication, to and from the radio portable terminal as well as the POS terminal and the order information notification means wired to the radio terminal, via the communication control apparatus and the radio base station.

2. An order data management system according to claim 1, wherein said order information notification means is a display/input apparatus for displaying and inputting the order information, or a printing apparatus for printing the order information and issuing a bill.

3. An order data management system comprising:
a radio portable terminal for inputting and radio-transmitting order information;
a POS terminal for storing sales information in a storage unit and managing the sales information;
order information notification means for notifying a worker of the order information;
a system control apparatus for managing information such as the sales information and order information;
a communication control apparatus wired to the system control apparatus;
a measuring device for measuring a weight of a stock;
a printing apparatus for printing a label with information of goods;
a radio terminal wired to at least one of the POS terminal, the measuring device, the printing apparatus and the order information notification means; and
a radio base station, wired to the communication control apparatus, for radio-communicating with the radio portable terminal and the radio terminal with use of multiduplexed bidirectional radio links,
wherein said system control apparatus transmits and receives information, by radio communication, to and from the radio portable terminal as well as the POS terminal, the order information notification means, the measuring device and the printing apparatus wired to the radio terminal, via the communication control apparatus and the radio base station.

4. An order data management system according to claim 1, wherein said radio base station is constantly radio-connected to part or all of the radio terminals.

5. An order data management system according to claim 1, wherein said POS terminal is provided within or externally connected to the system control apparatus, and
the system control apparatus transmits and receives, by radio communication, information to and from the radio portable terminal and the order information notification means, via the communication control apparatus and the radio base station.

6. An order data management system according to any one of claims 1 to 5, wherein said radio portable terminal and the radio terminal radio-communicate with the radio base station with use of full-duplex radio links.

7. An order data management system according to any one of claims 1 to 5, wherein said radio portable terminal and the radio terminal radio-communicate with the radio base station with use of full-duplex radio links adopting a time-division duplex system.

8. An order data management system according to claim 7, wherein said radio base station employs a plurality of slots for radio communication with a specific one of the radio terminals.
